# EUROPÄISCHE PATENTSCHRIFT

(11) **EP 0 563 662 B1**
(45) Veröffentlichungstag und Bekanntmachung des Hinweises auf die Patenterteilung: **15.11.1995**
(21) Anmeldenummer: 93104129.7
(22) Anmeldetag: 13.03.1993
(51) Int. Cl.: F02K 1/80

(54) **Abdichtungseinrichtung für Klappen mit Hilfe eines Sperrfluids**
Sealing device for flaps with a sealing fluid
Dispositif d'étanchéité avec un fluide de barrage

(30) Priorität: 17.03.1992 DE 4208472
(43) Veröffentlichungstag der Anmeldung: 06.10.1993
(73) Patentinhaber: MTU MOTOREN- UND TURBINEN-UNION MÜNCHEN GMBH, D-80976 München (DE)
(72) Erfinder: Ebenhoch, Gerhard, W-8082 Grafrath (DE)

(56) Entgegenhaltungen:
- EP-A- 0 523 559
- FR-A- 2 108 507
- US-A- 4 110 972
- US-A- 5 076 590

## Beschreibung

Die Erfindung bezieht sich auf eine Einrichtung nach dem Oberbegriff des Patentanspruchs 1.

Bei Schubdüsen für Flugtriebwerke gemäß Dokument US-A-5 076 590 kann eine variable Düsengeometrie zwischen auf einer Seite fest angeordneten Wandelementen und diesen auf der anderen Seite gegenüberliegenden, verstellbaren Primär- und Sekundärklappen erreicht werden. Dabei ist es sowohl für verstellbare Primär- und Sekundärklappen als auch für fest angeordneten bzw. eingestellte Wandelemente erforderlich, einen sich jeweils längs der äußeren Ränder der Klappen bzw. Wandelemente erstreckenden Spalt gegenüber Wandabschnitten eines Düsengehäuses abzudichten. Oft muß eine Heißgasströmung der Schubdüse gegenüber einer vom Düsengehäuse eingeschlossenen Umgebung (Druck-Kammern) oder gegenüber der Atmosphäre abgedichtet werden.

Die Belassung eines Spalts auch zwischen den fest angeordneten Wandelementen und daran angrenzenden Wandungen des Düsengehäuses ist erforderlich, um eine freie Dehnbarkeit der im Betrieb unterschiedlichen Temperaturen ausgesetzten Wandelemente relativ zu den Gehäusewandungen zu ermöglichen. Die beweglichen bzw. verstellbaren Klappen verlangen eine abzudichtende Spaltüberbrückung, wobei gegenseitige thermisch bedingte Dehnungsdifferenzen und noch thermisch bedingte, Wandverformungen oder Verwerfungen zu berücksichtigen sind. Im Rahmen der vorstehend zu den verstellbaren Klappen umrissenen Kriterien wurden schon Berührungsdichtungen vorgeschlagen, bei denen eine in einer Nut eines verstellbaren Wandelements bewegliche, von einem Differenzdruck betätigte, segmentierte Dichtleiste den betreffenden Spalt abdichten soll.

Bei den vorbekannten Abdichtungen über die gesamte Spaltlänge wird ein vergleichsweise hoher Energieaufwand - bzw. Leistungsverlust im aero-thermodynamischen Kreisprozeß verursacht; insbesondere dann, wenn die Abdichtung unter Bereitstellung eines Sperrfluids durchgeführt wird.

Der Erfindung liegt die Aufgabe zugrunde, eine für die beispielhaft genannten Anwendungsfälle geeignete Abdichteinrichtung anzugeben, die, bei vergleichsweise einfacher und verschleißloser Bauweise, längs betreffender Dichtspalte bzw. -linien einen verhältnismäßig geringen Energie- und Steuerungsaufwand für das bereitzustelle Sperrfluid erfordert.

Die gestellte Aufgabe ist gemäß Patentanspruch 1 erfindungsgemäß gelöst.

Somit ist eine Sperrfluidzufuhr zur primären Abdichtung entlang einer jeweiligen Dichtlinie bzw. eines Dichtspaltes möglich, die auf lokal unterschiedliche Druckverhältnisse optimal abstimmbar ist und ausreicht, um an jeder Stelle des Spalts ein Eindringen oder Überströmen z.B. von Heißgas oder eines explosiven Gasgemisches weitestgehend zu verhindern. Durch entsprechende Anordnung und Ausbildung der Drosselstellen kann der Sperrfluiddurchsatz, und damit der lokal erforderliche Sperrfluiddruck in den Kammern abgesenkt werden; je nach dem sich in Spaltlängsrichtung ändernden lokalen Druckverhältnis kann die Verteilung und Querschnittsausbildung der Drosselöffnungen und die die Kammerlänge beeinflussende Abstandsdichte der Querwände ausgerichtet werden. Als weiterer Parameter zur Steuerung der Durchsatzaufteilung kann die jeweilige Austrittsfläche pro Kammer angepaßt bzw. verringert werden. Gemäß der Erfindung kann also ein lokal abgestimmtes optimiertes Druckverhältnis zwischen dem lokalen Totaldruck des Sperrfluids in der Kammer bzw. stromab der Austrittsfläche und dem jeweils örtlichen statischen Druck in einem oder beiden durch ein Wandelement voneinander getrennten Räumen eingestellt werden.

Durch eine über eine Stelle von einer Kammer aus mögliche Zentralversorgung mit Sperrfluid lassen sich Aufwand und Gewicht der notwendigen Versorgungsinfrastruktur verringern. Ein aus Blech ausgeführter Einsatz kann gewichtssparend in die Nut des betreffenden Wandelements eingebracht werden. Ferner können örtliche Druckbelastungen eines zu einem Gehäuse (z.B. Schubdüse) gehörenden Wandelements vergleichsweise gering gehalten werden, wodurch die Gehäusewandstruktur gewichtlich leichter - also z.B. mit geringeren Wandstärken - gefertigt werden kann.

Die Erfindung ist mit einem äußerst geringen regel- und steuertechnischen Aufwand realisierbar, da die Ausbildung des Einsatzes selbst für ein entlang der Dichtlinie lokal angepaßtes Druckverhältnis sorgt; es ist lediglich notwendig, den Förderdruck des an einer Stelle zentral zugeführten Sperrfluids als Funktion des Betriebszustandes (z.B. Düsenstellung, Triebwerkslast, Umgebung) einzustellen.

Vorteilhafte Ausgestaltungen der Erfindung nach Anspruch 1 ergeben sich aus den Merkmalen der Patentansprüche 2 bis 9.

Anhand der Zeichungen ist die Erfindung beispielsweise weiter erläutert; es zeigen:
- Fig. 1: eine schematisch perspektivische Darstellung einer insbesondere für ein Hyperschall-Triebwerk vorgesehenen, variablen konvergenten/divergenten Schubdüse unter Verdeutlichung des abzudichtenden Spaltverlaufs (Dichtlinien),
- Fig. 2: die Einrichtung zur Abdichtung eines Spalts zwischen einem klappenähnlich fest angeordneten Wandelement und einem winkelversetzt daran angrenzenden Wandelement als Teil eines Düsengehäuses, quer geschnitten dargesellt,
- Fig. 3: eine schematische Perspektiv-Darstellung des in Fig. 2 zugrunde gelegten Einsatzes und
- Fig. 4: die Einrichtung zur Abdichtung eines Spalts zwischen einem klappenartig verstellbaren Wandelement und einem dazu winkelversetzt angeordneten Wandelement als Teil des Düsengehäues, quer geschnitten dargestellt.

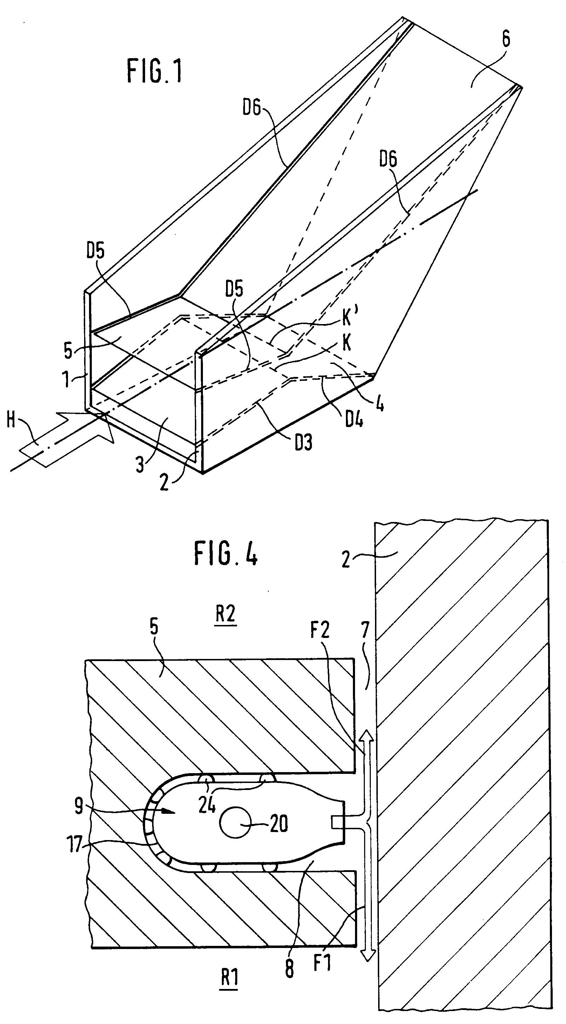

Fig. 1 veranschaulicht einen beispielhaft für die Durchführung der Erfindung geeigneten Anwendungsfall bei einer variablen konvergenten/divergenten Schubdüse für ein Hyperschalltriebwerk. Dabei ist die Schubdüse in axialer Richtung gemäß Pfeil H von Heißgas durchströmt. Zwischen seitlichen Wänden 1,2 eines Düsengehäuses sind untere Wandelemente 3,4 unter einem festen Anstellwinkel entlang einer Knickstelle K zueinander fest angeordnet. Den unteren Wandelementen 3,4 gegenüberliegende äußere Wandelemente 5,6 stellen verstellbare Primär- und Sekundärklappen dar, mit denen gegenüber den ortsfesten unteren Wandelementen 3,4 die Düsenkonvergenz, - divergenz sowie der engste Querschnitt etwa im Bereich zwischen den Knickstellen K,K' verändert werden kann. Entlang der Dichtlinien D3, D4 (unten) bzw. D 5, D6 (oben) soll eine Abdichtung der betreffenden Abstandsspalte in nachfolgend näher erläuterter Weise erfolgen.

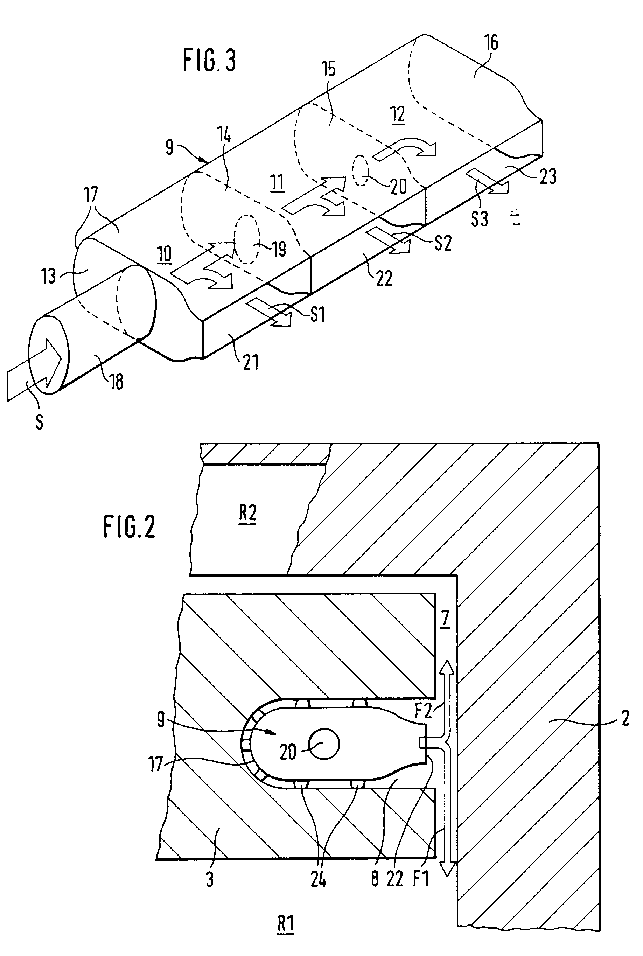

Gemäß Fig. 2 soll z.B. ein winkelartiger Abstandsspalt 7 zwischen einem fest angeordneten Wandelement 3 der Schubdüse und einem abgewinkelt daran angrenzenden Wandelement 2 des Düsengehäuses abgedichtet werden. Dabei weist das Wandelement 3 eine zum Spalt 7 hin offene Nut 8 auf, in die ein Einsatz 9 fest eingesetzt ist. Die Abdichtung zwischen den örtlich voneinander getrennten Räumen R1, R2 erfolgt berührungslos mittels nach beiden Seiten aus dem Einsatz 9 in den Spalt 7 abfließenden Sperrfluids F1,F2. Gemäß Fig. 3 ist der Einsatz 9 ein in mehrere Kammern 10,11,12 zergliederter Hohlkörper, wobei die Kammern 10,11,12 von Querwänden 13,14,15,16 relativ zum Verlauf des Außengehäuses 17 ausgebildet sind; die Querwände 13 und 16 stellen zugleich Abschlußwände des Einsatzes 9 dar. Dem Einsatz 9 wird von einer Stelle aus, also hier z.B. über eine Versorungsleitung 18, das Sperrfluid S zentral über die Querwand 13 der Kammer 10 zugeführt. Dem Leitungseintritt in die Kammer 10 koaxial bzw. längs einer gemeinsamen Mittellinie nachgeschaltete Bohrungen 19,20 in den Querwänden 14,15 bilden hier z.B. die Drosselöffnungen aus; mithin wird im vorliegenden Ausführungsbeispiel die Sperrfluidsströmung von Kammer zu Kammer (10,11;11,12) in Längsrichtung des Einsatzes 9 fortlaufend zunehmend gedrosselt. Zusammen mit den Querwänden 13,14,15,16 bildet das Außengehäuse 17 des Einsatzes 9 in Längsrichtung aufeinander folgende Austrittsflächen 21,22,23 für die jeweils aus den Kammern 10,11,12 abströmenden Teilströme S1,S2,S3 des Sperrfluids aus. Wie aus Fig. 2 und 3 ferner erkennbar, läuft das Außengehäuse 17 des Einsatzes 9 - in Richtung der Querdurchströmung - sich düsenartig verengend auf die Austrittsflächen, z.B. 22 (s.h. auch Fig.2) aus.

Je nach erforderlicher Drosselung kann z.B. die jeweilige Kammerlänge, und damit wiederum jeweilige Größe der einzelnen Austrittsflächen variert werden; als weiterer Drosselparameter könnten aber auch die Austrittsflächen für sich jeweils gleichförmig bzw. in Kammerlängsrichtung, aufeinander folgend, verändert werden.

Die Drossenöffnungen in den Querwänden 14,15 könnten auch als Schlitze ausgebildet werden. Ferner wäre es möglich, die Drosselöffnungen in Längsrichtung des Einsatzes relativ zueinander versetzt anzuordnen.

Der Einsatz 9 nach Fig. 3 wäre also so ausbildbar, daß die betreffenden jeweiligen Gesamtdrücke der Teilströme S1, S2, S3 des Sperrfluids, stromab der Austrittsflächen 21,22,23 stets auf die örtlich längs einer Dichtlinie, z.B. D 3 (Fig.1), in den voneinander getrennten Räumen R1 und/oder R2 sich lokal ändernden Druckverhältnisse der Fluide optimal abgestimmt sind. In Raum R1 kann es sich dabei um den sich längs der Dichtlinie D3 im Hauptkanal der Schubdüse örtlich ändernden statischen Druck der Heißgasströmung H handeln; im Raum R2 um einen sich vergleichbar örtlich ändernden Gegendruck aus z.B. Druck- oder Kühlluft, die längs, unterhalb der beiden Wandteile 3,4 (Fig.1) im Düsengehäuse strömt bzw. kammerartig geführt ist.

Gemäß der Erfindung kann der Einsatz 9 fest, aber jedoch leicht lösbar in der Nut 8 angeordnet sein; ferner kann der Einsatz 9 punktuell über Noppen 24 oder dergleichen in der Nut 8 frei dehnbar gehaltert sein; die Noppen 24 können - wie dargestellt- außen am Gehäuse 17 des Einsatzes 9 und/oder an der Innenwand der Nut 8 angeordnet sein. Die Nut 8 ist im wesentlichen U-förmig gestaltet, wobei parallele geradschenkelige Wandabschnitte der Nut 8 in Richtung auf den Nut-Grund halbkreisförmig zusammenlaufen; eine sinngemäß darauf abgestimmte U-form weist der Einsatz 9 mit seinem Gehäuse 17 auf.

Prinzipiell kann der Einsatz 9 gewichtlich leicht aus Blech gefertigt sein.

Fig. 4 verkörpert die Einrichtung zur Abdichtung eines Spalts 7 zwischen dem Wandelement 2 des Düsengehäuses und einem quer relativ dazu versetzten und verstellbaren Wandelement 5, im Zusammenhang mit Fig. 1 als vordere obere Primärklappe der Schubdüse. Unter Verwendung gleicher Bezugszeichen für praktisch identische Bauteile und Funktionen kann der insbesondere zu Fig. 3 dargestellte und beschriebene Einsatz 9 auch für die Abdichtung des Spalts 7, zwischen den Räumen R1 und R2 in Fig. 4 zugrunde gelegt werden. Beispielsweise kann also bei Fig. 4 mit Fig. 1 eine Abdichtung mit dem Sperrfluid aus S1,S2,S3 (Fig.3) zu F1,F2 (Fig.4) entlang der Dichtlinie D5 erfolgen in optimaler lokaler Anpassung an die sich in Strömungslängsrichtung lokal ändernden Druckverhältnisse der Fluidströmungen, z.B. von Heißgas im Raum R1 und von Druckluft im Raum R2.

Je nach dem Erfordernis der Abdichtung und er Anordnung der Wandelemente ist es im Rahmen der Erfindung durchaus möglich, das den Spalt abdichtende Sperrfluid überwiegend oder gänzlich gegen den statischen Druck in einen Raum R1 bzw. R 2 abfließen zu lassen. Beim Sperrfluid kann es sich um Druckluft oder z.B. ein Inertgas handeln.

Die Erfindung ist z.B. auch bei rechteckigen oder quadratischen Triebwerkeinläufen mit variabler Geometrie einsetzbar, insbesondere in Anwendung bei kombinierten Turbo-Staustrahltriebwerken; dabei sind insbesondere bei Staustrahlbetrieb extrem unterschiedliche Temperaturbeanspruchungen- und - dehnungen zwischen kooperierenden Wandbauteilen unter Gewährleistung gegenseitiger relativer Abdichtung zu beherrschen.

Ferner ist eine Anwendung der Erfindung bei sogenannten "Wandel-Turbo-Triebwerken" mit variabler Leistungscharakteristik möglich, wobei variable Massenstromaufteilungen auf verschiedene Triebwerkskreise in der Kombination verstellbarer bzw. verschiebbarer und stationärer Wandelemente vorgesehen sind.

## Patentansprüche

1. Einrichtung zur Abdichtung eines Spaltes (7) zwischen winkelversetzt und fest oder relativ zueinander beweglich angeordneten Bauteilen, insbesondere Wandelementen (3,2;5,2), die fluidisch unterschiedlich druckbeaufschlagte Räume (R1,R2) voneinander trennen, in denen sich der statische Druck längs des Spaltverlaufs ändert und worin das eine Wandelement (3;5) eine zum Spalt (7) hin offene Nut (8) aufweist, in der mindestens ein in Richtung auf den Spalt (7) geführter Einsatz (9) angeordnet ist, dadurch gekennzeichnet, daß
- der Einsatz (9) als Hohlkörper mit in Spaltlängsrichtung aufeinander folgenden Kammern (10,11,12) ausgebildet ist, die durch Öffnungen (19,20) miteinander verbunden sind und in den Spalt (7) mündende Austrittsflächen (21,22,23) für Sperrfluid aufweisen, das dem Einsatz an einer Stelle zugeführt wird;
- die Öffnungen (19,20) und Kammern (10,11,12) als Drosselstellen für das Sperrfluid ausgebildet sind, wobei die Drosselung auf den sich längs des Spaltverlaufs ändernden statischen Fluiddruck abgestimmt ist.

2. Einrichtung nach Anspruch 1, dadurch gekennzeichnet, daß der Einsatz (9) fest und lösbar in der Nut (8) angeordnet ist.

3. Einrichtung nach Anspruch 1 oder 2, dadurch gekennzeichnet, daß der Einsatz (9) aus Blech gefertigt ist.

4. Einrichtung nach einem der Ansprüche 1 bis 3, dadurch gekennzeichnet, daß die Kammern (10,11,12) zwischen in Längsrichtung gleichmäßig oder ungleichmäßig mit Abstand aufeinander folgenden Querwänden (13-16) eines im wesentlichen U-förmigen Gehäuses (17) des Einsatzes (9) ausgebildet sind.

5. Einrichtung nach einem der Ansprüche 1 bis 4, dadurch gekennzeichnet, daß das Gehäuse (17) des Einsatzes (9) zusammen mit den Querwänden (13-16) sich in Richtung der Sperrfluiddurchströmung düsenartig verengende Austrittsflächen (21,22,23) ausbildet.

6. Einrichtung nach einem oder mehreren der Ansprüche 1 bis 5, dadurch gekennzeichnet, daß die Öffnungen (19,20) insbesondere als Schlitze oder Bohrungen, mit von jeweils einer Kammer (10;11) zur nächstfolgenden Kammer (11;12) relativ zueinander bemessenen Drosselquerschnitten ausgebildet und in den Querwänden (14,15) angeordnet sind.

7. Einrichtung nach einem oder mehreren der Ansprüche 1 bis 6, dadurch gekennzeichnet, daß an eine zugleich als vordere oder hintere Abschlußwand des Einsatzes ausgebildete Querwand (13;16) eine Leitung (18) für die zentrale Sperrfluidversorgung angeschlossen ist.

8. Einrichtung nach einem oder mehreren der Ansprüche 1 bis 7, dadurch gekennzeichnet, daß die Drosselöffnungen auf einer gemeinsamen Mittellinie oder räumlich relativ zueinander versetzt in aufeinander folgenden Querwänden angeordnet sind.

9. Einrichtung nach einem oder mehreren der Ansprüche 1 bis 8, dadurch gekennzeichnet, daß der Einsatz (9) unter Zulassung thermisch bedingter relativer Dehnungsdifferenzen in der Nut (8) punktuell gehaltert ist.

## Claims

1. Device for sealing a gap (7) between angularly-offset components arranged fixedly or movably relative to one another, in particular wall elements (3, 2; 5, 2) which separate chambers at different fluidic pressure (R1, R2) from each other, in which chambers the static pressure varies along the gap path and wherein one wall element (3; 5) has a groove (8) open towards the gap (7), in which groove there is arranged at least one insert (9) guided in the direction of the gap (7), characterised in that
- the insert (9) is constructed as a hollow body with chambers (10, 11, 12), following one another in the longitudinal direction of the gap, which are joined together by apertures (19, 20) and have outlet surfaces (21, 22, 23), issuing into the gap (7), for sealing fluid which is supplied to the insert at a point;
- the apertures (19, 20) and chambers (10, 11, 12) are constructed as throttle points for the sealing fluid, the throttling being adjusted to the static fluid pressure varying along the gap path.

2. Device according to claim 1, characterised in that the insert (9) is arranged fixedly and releasably in the groove (8).

3. Device according to claim 1 or 2, characterised in that the insert (9) is made of sheet metal.

4. Device according to one of claims 1 to 3, characterised in that the chambers (10, 11, 12) are constructed between transverse walls (13-16) of a substantially U-shaped housing (17) of the insert (9), these walls following each other uniformly or non-uniformly spaced apart in the longitudinal direction.

5. Device according to one of claims 1 to 4, characterised in that the housing (17) of the insert (9) together with the transverse walls (13-16) forms outlet surfaces (21, 22, 23) narrowing like a nozzle in the direction of the sealing fluid flow.

6. Device according to one or more of claims 1 to 5, characterised in that the apertures (19, 20) are constructed in particular as slots or bores having throttle cross-sections measured relatively to one another respectively from one chamber (10; 11) to the next chamber (11; 12), and being arranged in the transverse walls (14, 15).

7. Device according to one or more of claims 1 to 6, characterised in that a line (18) for the central sealing fluid supply is connected to a transverse wall (13; 16) which at the same time forms a front or rear end wall of the insert.

8. Device according to one or more of claims 1 to 7, characterised in that the throttle apertures are arranged on a common middle line or spatially offset relatively to one another in consecutive transverse walls.

9. Device according to one or more of claims 1 to 8, characterised in that the insert (9) is retained at points in the groove (8) so as to allow thermally caused relative expansion differences.

## Revendications

1. Dispositif destiné à assurer l'étanchéité d'un interstice (7) entre des pièces disposées de manière décalée angulairement l'une par rapport à l'autre, et de façon fixe ou relativement mobile l'une par rapport à l'autre, notamment des éléments de paroi (3, 2; 5, 2), qui séparent des chambres (R1, R2) pouvant être alimentées en fluide à des pressions différentes, dans lesquelles la pression statique varie le long de l'étendue de l'interstice, et dont l'un des éléments de paroi (3; 5) présente une rainure (8) ouverte en direction de l'interstice (7), et dans laquelle est disposé un insert (9) guidé en direction de l'interstice (7), caractérisé
- en ce que I'insert (9) est réalisé sous la forme d'un corps creux comportant des compartiments (10, 11, 12), qui se succèdent dans la direction longitudinale de l'interstice, sont reliés l'un à l'autre par des ouvertures (19, 20), et présentent des surfaces de sortie (21, 22, 23) débouchant dans l'interstice (7) et destinées à un fluide de barrage amené à l'insert en un endroit;
- et en ce que les ouvertures (19, 20) et les compartiments (10, 11, 12) sont réalisés sous la forme d'étranglements pour le fluide de barrage, le degré d'étranglement étant adapté à la pression statique du fluide variant le long de l'étendue de l'interstice.

2. Dispositif selon la revendication 1, caractérisé en ce que l'insert (9) est disposé de manière fixe et amovible dans la rainure (8).

3. Dispositif selon la revendication 1 ou 2, caractérisé en ce que l'insert (9) est fabriqué en tôle.

4. Dispositif selon l'une des revendications 1 à 3, caractérisé en ce que les compartiments (10, 11, 12) sont formés entre des parois transversales (13-16) d'un carter sensiblement en forme de " U " de l'insert (9), ces parois transversales se succédant dans la direction longitudinale, selon des intervalles réguliers ou irréguliers.

5. Dispositif selon l'une des revendications 1 à 4, caractérisé en ce que le carter (17) de l'insert (9), en commun avec les parois transversales (13-16), forme des surfaces de sortie (21, 22, 23) se rétrécissant à la manière de buses, dans la direction de passage de l'écoulement du fluide de barrage.

6. Dispositif selon l'une ou plusieurs des revendications 1 à 5, caractérisé en ce que les ouvertures (19, 20) sont réalisées notamment en tant que fentes ou perçages, présentant des sections transversales d'étranglement dimensionnées les unes par rapport aux autres, d'un compartiment (10; 11) au compartiment suivant (11; 12), et sont agencées dans les parois transversales (14, 15).

7. Dispositif selon l'une ou plusieurs des revendications 1 à 6, caractérisé en ce qu'une conduite (18) destinée à l'alimentation centralisée en fluide de barrage, est raccordée à une paroi transversale (13; 16) faisant simultanément office de paroi terminale de fermeture de l'insert.

8. Dispositif selon l'une ou plusieurs des revendications 1 à 7, caractérisé en ce que les ouvertures d'étranglement sont agencées sur une ligne centrale commune, ou de manière décalée dans l'espace les unes par rapport aux autres, dans des parois transversales qui se succèdent.

9. Dispositif selon l'une ou plusieurs des revendications 1 à 8, caractérisé en ce que l'insert (9) est supporté par points dans la rainure (8), tout en permettant des différences de dilatation thermiques relatives.
